# EUROPÄISCHE PATENTSCHRIFT

(11) **EP 2 088 956 B1**
(45) Veröffentlichungstag und Bekanntmachung des Hinweises auf die Patenterteilung: **15.06.2016**
(21) Anmeldenummer: 07801281.2
(22) Anmeldetag: 24.08.2007
(51) Int. Cl.: A61C 8/00

(54) **ZWEITEILIGES ZAHNIMPLANTAT MIT GEWINDEHÜLSE**
TWO-PART TOOTH IMPLANT COMPRISING A THREADED SLEEVE
IMPLANT DENTAIRE EN DEUX PARTIES AVEC DOUILLE FILETÉE

(30) Priorität: 25.08.2006 DE 202006013267 U; 25.08.2006 DE 202006013265 U; 31.08.2006 DE 202006013585 U; 25.09.2006 DE 102006045186; 25.09.2006 DE 102006045188; 25.09.2006 DE 102006045187
(43) Veröffentlichungstag der Anmeldung: 19.08.2009
(73) Patentinhaber: Mehrhof Implant Technologies GmbH, 10553 Berlin (DE)
(72) Erfinder: Mehrhof, Jürgen, 14129 Berlin (DE)
(74) Vertreter: Bauer, Clemens
(86) Internationale Anmeldenummer: PCT/DE2007/001513
(87) Internationale Veröffentlichungsnummer: WO 2008/022635

(56) Entgegenhaltungen:
- WO-A-98/52487
- DE-A1- 2 413 883
- DE-A1-102006 045 188

## Beschreibung

Die Erfindung betrifft gemäß einem ersten Aspekt ein Verbindungselement für ein zweiteiliges Zahnimplantat aus Nichtmetall. Ein distaler Implantatsteil ist als künstliche Zahnwurzel für die Implantation in einem Kieferknochen ausgebildet und ein proximaler Implantatsteil trägt im eingebauten Zustand eine künstliche Zahnkrone. Die Verbindung zwischen distalem und proximalem Implantatsteil ist derart, dass das proximale Ende des distalen Implantatsteils und das distale Ende des proximalen Implantatsteils vorteilhafterweise geometrisch zueinander passend gestaltet sind und im implantierten Zustand des Schaftes aneinander angrenzen.

Die Erfindung betrifft insbesondere die Konfiguration, die Art und Weise der Unterbringung und die Verwendung eines Verbindungselementes in Form einer vorteilhafterweise metallischen Gewindehülse im distalen Implantatsteil, welches die Aufnahme für eine kraftschlüssige Verbindung in Form eines Eingriffs, insbesondere einer Verschraubung, des distalen Implantatsteils mit dem proximalen Implantatsteil darstellt.

Zahnimplantate dienen dem Ersatz verloren gegangener Zähne. Bei Zahnimplantaten unterscheidet man ein- und zweiteilige Systeme. Die vorliegende Erfindung betrifft ein zweiteiliges System. Derartige zweiteilige Systeme besitzen einen distalen und einen proximalen Implantatsteil. Der distale Implantatsteil wird in den Kieferknochen eingebracht und verwächst dort mit dem Knochen. Das Verwachsen des distalen Implantatsteils mit dem Knochen wird im Folgenden als Osseointegration bezeichnet. Der proximale Implantatsteil - auch Aufbau oder Abutment genannt - ragt am oder nahe seines proximalen Endes einige Millimeter in den Mundraum und dient als künstlicher Zahnstumpf. Im vorliegenden Fall bildet der distale Implantatsteil eine künstliche Zahnwurzel, während der proximale Implantatsteil den zuvor erwähnten künstlichen Zahnstumpf bildet. Der proximale Implantatsteil nimmt Zahnersatz verschiedenster Formen, zum Beispiel in Form einer Krone, auf und verbindet diese über den distalen Implantatsteil mit dem Kiefer.

Die Verbindung zwischen distalem und proximalem Implantatsteil bei zweiteiligen Implantaten wird im Folgenden auch mit Implantat-Abutment-Verbindung bezeichnet und mit IAV abgekürzt. Das proximale Ende des distalen Implantatsteils und das distale Ende des proximalen Implantatsteils sind geometrisch zueinander passend gestaltet und grenzen im implantierten Zustand des Schaftes aneinander an.

Der distale Implantatsteil und der proximale Implantatsteil werden üblicherweise in Längsrichtung, durch eine in Längsrichtung verlaufende Befestigungsschraubeauch Schraubbolzen genannt - miteinander verbunden. Die Geometrie des Verbindungsbereiches zwischen distalem Implantatsteil und proximalem Implantatsteil ist derart, dass die Verbindung zwischen beiden Implantatsteilen form- oder kraftschlüssig oder beides ist.

Eine wichtige Anforderungen an die Verbindung zwischen distalem Implantatsteil und proximalem Implantatsteil ist, dass sich die IAV auch während immer wiederkehrender Krafteinwirkungen auf die Implantatsteile, bedingt durch Kauprozesse, keinesfalls dadurch verändern darf, dass sich die Schraubverbindung selbstständig lockert. Das Phänomen des sich selbstständig lösenden Schraubbolzens wird im Folgenden als Schraubenlockerung bezeichnet. Zur Erreichung der notwendigen Montagekraft für eine stabile IAV wird die Befestigungsschraube mit einem definierten Anzugdrehmoment eingeschraubt. Die geforderten Anzugdrehmomente variieren je nach Implantatsystem zwischen 20 Ncm bis 35 Ncm.

Die verbundenen Implantatsteile müssen in den Bereichen des Innengewindes des distalen Implantatsteils sowie des Außengewindes der Befestigungsschraube und der Schraubenkopfstirnfläche (Anschlagfläche) der Befestigungsschraube, sowie des Schraubenkopfsitzes des proximalen Implantatsteils sehr stabil sein, da sie der permanenten Montagekraft von, je nach Implantatsystem, 700 N bis 2000 N ausgesetzt sind. Diese definierte Montagekraft muss während der gesamten Dauer des Verbleibens, der miteinander montierten Implantatkomponenten im Munde des Patienten, aufrechterhalten bleiben. Zur Überprüfung der Funktionstüchtigkeit der IAV werden Testverfahren, wie z.B. der Versuchsaufbau nach der Norm DIN EN ISO 14801, angewandt. Eine gut funktionierende Schraubverbindung im Bereich der IAV ist so ausgelegt, dass sie viele Millionen Zyklen einer definierten auf die IAV einwirkenden Kraft schadlos und ohne Veränderung der Montagespannung übersteht.

Zweiteilige Zahnimplantate werden üblicherweise aus Titan gefertigt. Implantatkomponenten, welche aus Titan und nach dem Stand der Technik hergestellt sind, können diese Montagekräfte dauerhaft aufnehmen, ohne dass sie während des Montierens oder danach Schaden nehmen. Die Gewindeform bei einem Titanimplantat und der dazu passenden Befestigungschraube aus Titan ist üblicher weise in der Art eines Regelgewindes nach DIN 13-M 2 oder mit ähnlichem Durchmesser gestaltet. Gewinde dieser Art haben sich beim Einsatz in der dentalen Implantologie bewährt und wirken, bedingt durch ihre geometrische Form, begünstigend gegen mögliche Schraubenlockerungen. Auch die Tatsache, dass zwischen gleichen Materialpaarungen im Bereich der Gewindepartner größere Adhäsionskräfte bestehen als bei ungleichen Materialpartnern, wirkt sich begünstigend gegen mögliche Schraubenlockerungen aus.

Im Gegensatz zur vorliegenden Erfindung werden zweiteilige Zahnimplantate bislang nicht aus Keramik hergestellt. Ein besonderes Problem bei der Verwendung von Keramik als Werkstoff für zweiteilige Zahnimplantate besteht darin, dass aus Keramik hergestellte Implantatinnengewinde, den in der dentalen Implantologie geforderten Montagekräften nicht gewachsen sind. Gemäß der Erfindung wurde erkannt, dass auf Grund hoher, über der Belastbarkeit von Keramik hinaus auftretender Kerbspannungen im Bereich der annähernd scharfkantig gestalteten Radien von Gewindeformen mit dem Regelgewinde nach DIN 13, ein Keramikinnengewinde bei der geforderten Montagekraft im Bereich der annähernd scharfkantig gestalteten Radien zerstört werden würde. Würde man die Gewindeform im Bereich der annähernd scharfkantig gestalteten Radien stärker verrundet gestalten, um auftretende Kerbspannungen auf ein materialverträgliches Maß abzusenken, wäre die mögliche Gefahr von Schraubenlockerungen sehr groß. Ferner wurde gemäß der Erfindung erkannt, dass bei der Verwendung einer Titanschraube in einem Keramikinnengewinde das Potential für eine Schraubenlockerung durch die Verwendung einer ungleichen Materialpaarung für die beiden Gewindepartner und die daraus verminderten Adhäsionskräfte zwischen den Gewindepartnem weiter ansteigen würde. Die Gefahr von möglichen Schraubenlockerungen könnte lediglich durch eine dauerhafte Verklebung der Schraubverbindung verhindert werden. Eine dauerhafte Verbindung zwischen Implantat und Aufbau ist jedoch nicht erwünscht, zumal sie das mögliche Behandlungsspektrum für eine Folgeversorgung extrem einschränken würde.

Die WO 98/52487 A1 betrifft einen Support zum Halten eines Zahnersatzes, an dem eine Kappe befestigt werden kann, welche mindestens einen zum Eingreifen in einen Zwischenraum ausgebildeten Vorsprung aufweist.

Die DE 2 413 883 A1 betrifft ein Implantat zur Befestigung eines Zahnersatzes, mit einem Pfosten, der aus zwei miteinander verschraubbaren Teilen besteht, von denen das eine das in den Kieferknochen einbringbare Ende des Pfostens und das andere das aus der Schleimhautdecke herausragende Ende zur Befestigung des Zahnersatzes bildet.

Es ist somit Aufgabe der vorliegenden Erfindung, eine in Bezug auf die vorgenannten Problemstellungen verbesserte kraftschlüssige Verbindung in Form einer Schraubenverbindung für ein zweiteiliges Zahnimplantat, bestehend aus Keramik, zu schaffen.

Diese Aufgabe wird gemäß der Erfindung durch ein Verbundsystem bzw. Verbindungssystem für zweiteiliges Zahnimplantat gemäß Anspruch 1 gelöst. Bevorzugte Ausführungsformen ergeben sich aus den abhängigen Unteransprüchen.

Gemäß der Erfindung ist ein Verbundsystem bzw. Verbindungssystem für ein zweiteiliges Zahnimplantat vorgesehen, bei dem in einem distalen Implantatsteil, bestehend aus Nichtmetall, eine Gewindehülse, bestehend aus Metall, so eingebracht wird, dass beim Verbinden eines distalen Keramikimplantatsteils mit einem proximalen, vorzugsweise aus Keramik bestehenden Implantatsteil, unter Verwendung einer Befestigungsschraube, bestehend aus Metall, die geforderte Montagekraft erreicht wird, ohne dass auch nur eines der Teile, während des Montierens oder danach, Schaden nimmt.

Die Vorteile der vorliegenden Erfindung liegen darin, daß die Verbindung so stabil ist, um die enormen Kaukräften aufzunehmen. Die Passteile sind exakt arbeitbar und weisen im zusammengefügten Zustand keine Spalte auf. Der proximale Implantatsteil kann jederzeit vom Implantat gelöst und wieder damit verbunden werden. Der Aufbau kann durch andere Aufbauten ersetzt werden. Die beiden Implantatsteile sind im verbundenen Zustand starr und spielfrei sowie gegen Verdrehen um die Implantatslängsachse gesichert. Die Verbindung ist so gestaltet, dass sie während des Verbleibens der montierten Implantatverbindung im Munde des Patienten dauerhaft bestehen bleiben kann. Die IAV verändert sich auch während immer wiederkehrender Krafteinwirkungen auf die Implantatsteile, bedingt durch Kauprozesse, nicht, so dass ein selbständiges Lockern der Schraubverbindung verhindert wird.

Gemäß einer bevorzugten Ausführungsvariante weist ein einen distalen Implantatsteil bildender distaler Teilschaft eine zu seinem proximalen Ende hin offene Längsöffnung mit einer Innenwandung auf, die eine Grundgeometrie mit kreisförmigem Querschnitt besitzt. Der in Richtung proximal gerichtete Anteil der Längsöffnung bildet die Aufnahme für das distale Ende des Aufbauteilschaftes aus. An diesen in Richtung proximal gerichteten Anteil der Längsöffnung grenzt ein in Richtung distal verlaufender Anteil der Längsöffnung an, dessen Innenwandung die Grundgeometrie eines Innengewindes aufweist. Passend zu diesem Innengewinde ist das Außengewinde gestaltet, das sich über die komplette Außenwand einer Gewindehülse erstreckt. Die Außenwand der Gewindehülse besitzt ebenfalls eine Grundgeometrie mit kreisförmigem Querschnitt.

In die proximale Längsöffnung des distalen Implantatsteils wird in dessen Innengewinde eine Gewindehülse mit ihrem Außengewinde, vorzugsweise bestehend aus Metall, eingeschraubt. Die Verbindungsflächen zwischen Gewindehülse und dem distalen Implantatsteil sind so gestaltet, dass die relative Position der beiden Teile, sowohl in axialer Richtung als auch in rotatorischer Richtung, durch eng aufeinander aufliegende Flankenflächen, im Folgenden als Gewindeflanken bezeichnet, genauestens definiert wird. Beim Einschrauben der Gewindehülse in das distale Implantatsteil gleiten die Gewindeflanken der Gewindehülse beim weiteren Eindrehen in das proximale Ende des distalen Implantatsteils bis die Gewindehülse ihre axiale Endposition an einander zugewandten Anschlagflächen erreicht. Unter Verwendung eines definierten Anzugdrehmomentes wird die Gewindehülse somit dauerhaft an dieser Position im distalen Implantatsteil fixiert.

Die Gewindeflanken des Innengewindes des distalen Implantatsteils sind derart gestaltet, dass die durch die Montage des distalen Implantatsteils mit dem proximalen Implantatsteil auftretenden Kräfte keine Schädigung des Keramikmaterials zur Folge hat. Dazu ist das Innengewinde des distalen Implantatsteils vorteilhafterweise so gestaltet, dass zumindest die Übergänge zwischen den in Richtung proximal gerichteten Gewindeflanken und der Außenfläche des Innengewindes, welche den Innengewinde-Außen-Durchmesser definiert, vorteilhafterweise mit einem Radius von im wesentichen 0,1 mm, vorzugsweise mindestens jedoch im wesentichen 0,05mm, verrundet gestaltet sind. Diese im Folgenden mit R₁ bezeichneten Verrundungen senken beim Übertragen der Montagekraft vorteilhafterweise die auf das Innengewinde des Keramikimplantats auftretenden Kerbspannungen auf ein materialverträgliches Maß ab. Gemäß der vorangegangenen Beschreibung wird diese Gewindeform im Folgenden als modifiziertes Rundgewinde bezeichnet. Dieses modifizierte Rundgewinde entspricht vorzugsweise in der Form seiner Grundgeometrie einem Rundgewinde nach DIN 405.

Der zur Verfügung stehende Raum für die Gewindehülse im Implantatsteil ist im Maß des Durchmessers, bedingt durch die geringen Größenverhältnisse von dentalen Implantaten, stark eingeschränkt. Dieser Umstand erfordert eine sehr dünnwandige Gestaltung der Gewindehülse. Um eine Schädigung der Gewindehülse während der Montage des distalen Implantatsteils mit dem proximalen Implantatsteil auszuschließen, ist das Außengewinde der Gewindehülse derart gestaltet, dass zumindest die Übergänge zwischen den nach distal gerichteten Gewindeflanken und der Innenflächen des Außengewindes, welche den Außengewinde-Kern-Durchmesser definieren, vorteilhafterweise mit einem Radius von im wesentichen 0,05mm, vorzugsweise mindestens jedoch im wesentlichen 0,01 mm, verrundet gestaltet sind. Somit werden die auf das Titanmaterial einwirkenden Zugspannungen zweckmäßigerweise auf ein materialverträgliches Maß, insbesondere unterhalb der Fließgrenze von Titan, abgesenkt.

Zur Sicherung der Gewindehülse an ihrer Endposition im Keramikimplantat kann zusätzlich ein biokompatibler Klebstoff, z.B. Kunststoffzement, verwendet werden. Noch bevor die Gewindehülse in das distale Implantatsteil eingeschraubt wird, wird eine definierte Menge des Klebers zum distalen Ende der proximalen Längsöffnung des distalen Implantatsteils hin in dieses eingebracht. Nach dem Aushärten des Klebers ist die Gewindehülse an ihrer eingeschraubten Endposition dauerhaft mit dem Implantatsteil verbunden (verklebt). Zur Unterstützung der Verklebung können vorzugsweise im distalen Anteil des Innengewindes des Keramikimplantats und des Außengewindes der Metallgewindehülse Retentionen in Form von Vertiefungen vorgesehen sein, welche umlaufend um die Innenwandung des Implantatteils und umlaufend um die Außenwandung der Gewindehülse in deren Wandungen eingelassen bzw. angeordnet sind. Der Kleber füllt diese Vertiefungen auf und verhindert nach seiner vollständigen Aushärtung eine Lösung der Klebeverbindung.

Die Gewindehülse weist eine, zu ihrem proximalen Ende hin offene Längsöffnung mit einer Innenwandung auf, die eine Grundgeometrie mit kreisförmigem Querschnitt besitzt. Die Innenwandung dieser Längsöffnung ist vorzugsweise in Form eines Innengewindes nach DIN 13-M 2 gestaltet.

Bei der Montage des distalen Implantatsteils mit dem proximalen Implantatsteil werden die Montagekräfte somit zunächst von der Befestigungsschraube über das allgemeine Regelgewinde nach DIN 13-M 2 auf die Gewindehülse übertragen, welche ihrerseits über das modifizierte Rundgewinde mit dem Implantatsteil verbunden ist und die Montagekräfte an dieses weiterleitet.

Das Maß der Gewindesteigung des modifizierten Rundgewindes wird vorzugsweise ausschließlich auf eine materialbegünstigende Übertragung der Montagekraft ausgerichtet. Vorzugsweise wird in Relation zur Größe der Verrundung des Radius R₁ und des Durchmessers sowie der Flankenhöhe des Gewindes, die kleinstmögliche Gewindesteigung gewählt, um somit die kraftübertragende Oberfläche so groß wie möglich zu gestalten. Diese Angaben gelten sowohl für das Innengewinde des Implantatsteils als auch für das Außengewinde der Gewindehülse.

Als weitere bevorzugte Ausführungsform können im Vergleich zur symmetrischen Gestaltung der Gewindeprofile, nach der Art des beschriebenen modifizierten Rundgewindes, die Gewindeprofile auch asymmetrisch ausgebildet sein. Hierbei ist, wie auch beim modifizierten Rundgewinde, das Innengewinde des distalen Implantatsteils vorteilhafterweise so gestaltet, dass die Übergänge zwischen den in Richtung proximal gerichteten Gewindeflanken und der Außenfläche des Innengewindes, mit einem Radius von im wesentlichen 0,1 mm, vorzugsweise mindestens jedoch im wesentlichen 0,05mm, verrundet gestaltet sind. Gemäß der vorangegangenen Beschreibung wird diese Gewindeform im Folgenden als verrundetes modifiziertes Sägengewinde bezeichnet. Dieses verrundete modifizierte Sägengewinde entspricht vorteilhafterweise in der Form seiner Grundgeometrie der eines Sägengewinde nach DIN 513 an. Bevorzugterweise ist beim verrundeten modifizierten Sägengewinde der Winkel zwischen den in Richtung proximal gerichteten Gewindeflanken und der Außenfläche des Innengewindes kleiner bzw. steiler als zwischen den in Richtung distal gerichteten Gewindeflanken und der Außenfläche des Innengewindes. Bei dieser Ausführungsvariante ist die Gewindehülse ebenso wie bei der Gewindehülse mit modifiziertem Rundgewinde so gestaltet, dass die Übergänge zwischen den nach distal gerichteten Gewindeflanken und der Innenflächen des Außengewindes, zweckmäßigerweise mit einem Radius von im wesentlichen 0,05mm, vorzugsweise mindestens jedoch im wesentlichen 0,01 mm, verrundet gestaltet sind. Somit werden auch hier die auf das Titanmaterial einwirkenden Zugspannungen vorteilhafterweise auf ein materialverträgliches Maß unterhalb der Fließgrenze von Titan abgesenkt. Vorzugsweise ist die Gewindehülse mit verrundetem modifizierten Sägengewinde derart gestaltet, dass der Winkel zwischen den in Richtung distal gerichteten Gewindeflanken und der Innenfläche des Außengewindes kleiner bzw. steiler ist, als der Winkel zwischen der in Richtung proximal gerichteten Gewindeflanken und der Innenfläche des Außengewindes.

Die Verwendung einer Metallgewindehülse bietet gegenüber der direkten Verschraubung weiterhin den Vorteil, dass eine Metallgewindehülse bedingt durch ihren im Verhältnis zur Befestigungsschraube größeren Außendurchmesser die Montagekraft auf eine größere Oberfläche der in Keramik gestalteten Geometrien des Innengewindes des distalen Implantatsteils verteilt. Somit werden die auf die Keramikgeometrien einwirkenden Zugspannungen und Kerbspannungen weiter minimiert. Würde man eine Befestigungsschraube mit einem Durchmesser gleich dem der Gewindehülse verwenden, um auf diese verzichten zu können, würden auf Grund der größeren Oberfläche der Gewinde und der daraus resultierenden vergrößerten Reibungskräfte zwischen den Gewindepartnern, stark erhöhte Schraubenanzugdrehmomente notwendig werden, um die für die IAV notwendige Montagekraft zu erreichen. Diese erhöhten Schraubenanzugdrehmomente könnten die Verbindung zwischen Implantat und Knochen, des bereits osseointegrierten Implantates, gefährden.

Die Verwendung einer Metallgewindehülse bietet neben der materialgerechten Übertragung der Montagekraft auf das Keramikimplantat zudem den Vorteil, dass nun durch die Verwendung von Metall, z.B. Titan, für das Innengewinde der Gewindehülse und der eben solchen Verwendung von Metall, z.B. Titan, für das Außengewinde der Befestigungsschraube, gleiche Materialien eingesetzt werden und somit hohe Adhäsionskräfte der Materialpartner zueinander bestehen. In Kombination mit dem bewährten Regelgewinde nach DIN 13 können somit Schraubenlockerungen ohne eine Verklebung der Gewindepartner miteinander weitestgehend verhindert werden. Gemäß einer weiteren Ausführungsform weist ein, einen distalen Implantatsteil bildender distaler Teilschaft, eine zu seinem distalen Ende hin offenen Rücksprung bzw. offene Längsöffnung bzw. Ausnehmung mit einer Innenwandung auf, die eine Grundgeometrie mit vorzugsweise kreisförmigem Querschnitt besitzt und an die flächige Vorsprünge in Längsrichtung des Teilschaftes verlaufend, angebracht sind. Die Gewindehülse besitzt eine zylindrische Außenwandung mit einer Grundgeometrie mit vorzugsweise kreisförmigem Querschnitt, welche passend zur Längsöffnung des distalen Teilschaftes gestaltet ist. Vorzugsweise weist die Außenwandung der Gewindehülse in Längsrichtung verlaufende flächige Vertiefungen auf, die derart an die flächigen Vorsprünge des distalen Teilschaftes angepasst sind, dass Flankenabschnitte der flächigen Vorsprünge des distalen Teilschaftes mit Flankenabschnitten der flächigen Vertiefungen der Gewindehülse derart zusammenwirken, dass sich die eng aneinander anliegenden Flächen gegenüberliegen und auf diese Weise die relative Position des distalen Teilschaftes und der Gewindehülse sowohl in axialer als auch in rotatorischer Richtung fixieren, wenn der distale Teilschaft und die Gewindehülse miteinander verbunden werden, beziehungsweise miteinander verbunden sind. Vorzugsweise wird die Gewindehülse, bestehend aus Metall, z.B. Titan, am distalen Ende des distalen Implantatsteils in dieses eingebracht. Beim Verbinden der Gewindehülse mit dem distalen Implantatsteil gleiten die Außenwandungen der Gewindehülse beim weiteren Einbringen in das distale Ende des distalen Implantatsteils, bis die Hülse ihre axiale Endposition an einander zugewandten Anschlagflächen erreicht. Die Geometrie des distalen Implantatsteils und der Gewindehülse ist im Bereich der Verbindung zwischen beiden Schaftteilen vorzugsweise derart gestaltet, dass die Verbindung verdrehsicher ist. Die einander berührenden Flächen in axialer Richtung werden durch die gegenüberliegenden Flanken des proximalen Endes der Gewindehülse und der in Richtung distal gerichteten Flanke des distalen Teilschaftes gebildet. Sie wirken als Anschlagsflächen und bilden einen definierten Höhenanschlag. Die von der Befestigungsschraube auf die Gewindehülse übertragenen Montagekräfte werden somit auf die distale Fläche der Querschnittsverjüngung des distalen Implantatsteils übertragen. Der Übergang zwischen der distalen Fläche der Querschnittsverjüngung des distalen Implantatsteils und der Innenwandung der zum distalen Ende des distalen Implantatsteils hin offenen Längsöffnung ist in Form einer größtmöglichen Verrundung, vorzugsweise mindestens jedoch mit einem Radius von im wesentlichen 0,05mm, gestaltet. Dadurch wird vorteilhafterweise erreicht, dass die in diesem Bereich auftretenden Zugkräfte nicht über einem materialverträglichen Maß liegen. Auch bei dieser Ausführungsvariante wirkt sich die große kraftübertragende Fläche, auf Grund eines im Vergleich zum Durchmesser der Befestigungsschraube größeren Durchmessers der Gewindehülse, positiv auf die Kraftübertragung bei der Montage der IAV aus.

Die Gewindehülse weist eine zu ihrem proximalen Ende hin offene Längsöffnung bzw. einen Rücksprung bzw. Ausnehmung mit einer Innenwandung auf, die eine Grundgeometrie mit zweckmäßigerweise kreisförmigem Querschnitt besitzt. Die Innenwandung dieser Längsöffnung ist vorzugsweise in Form des bereits beschriebenen Innengewindes nach DIN 13 gestaltet.

Vorzugsweise wird nach dem die Gewindehülse in das distale Implantatsteil eingebracht ist, die zum distalen Ende des distalen Implantatsteils hin offene Längsöffnung mit einem Verschlusskörper, vorzugsweise bestehend aus Keramik, verschlossen, dessen Außenwandung eine Grundgeometrie mit vorzugsweise kreisförmigem Querschnitt besitzt, welche zweckmäßigerweise geometrisch passend zu der Innenwandung der Längsöffnung des distalen Implantatsteils gestaltet ist. Beim Verbinden des Verschlusskörpers mit dem distalen Implantatsteil gleitet die Außenwandung des Verschlusskörpers beim weiteren Einbringen in das distale Ende des distalen Implantatsteils, bis er seine axiale Endposition an einander zugewandten Anschlagflächen erreicht. Der in das distale Implantatsteil eingebrachte Verschlusskörper komplettiert die Form des distalen Implantatsteils nach distal. Der Montagespalt zwischen distalem Implantatsteil und dem Verschlusskörper kann, nach dem Verbinden der beiden Teile miteinander, mit einem biokompatiblen Material verschlossen werden. Vorzugsweise kann ein Keramikmaterial oder Glasmaterial, welches auf den Wärmeausdehnungskoeffizienten des für die Implantatsteile verwendeten Keramikmaterials abgestimmt ist, während eines Brennvorgangs in den Montagespalt eingebracht bzw. eingebrannt und Bakteriendicht verschlossen werden.

Als Ausführuhgsvariante kann das erfindungsgemäße Verbindungselement neben der Verwendung in einem distalen Implantatsteil, bestehend aus Keramik, wie z.B. Zirkoniumdioxyd, auch in einem aus Kunststoff, wie z.B. Polyetheretherketon (PEEK), bestehenden distalen Implantatsteil Verwendung finden.

Weitere Vorteile und Merkmale der Erfindung ergeben sich aus der Beschreibung bevorzugter Ausführungsformen der Erfindung mit Bezug auf die beigefügten Zeichnungen, in welchen zwei Ausführungsbeispiele (Figs. A1 - A9, welche das erste Ausführungsbeispiel darstellen, und Figs. A10 - A16, welche das zweite Ausführungsbeispiel darstellen) eines erfindungsgemäßen Verbindungselementes für ein zweiteiliges Zahnimplantat aus Nichtmetall näher dargestellt sind, wobei einzelne Merkmale der dargestellten Ausführungsformen zu neuen Ausführungsformen kombiniert werden können.

Von den Figuren zeigen:
- Figur A1:: eine perspektivische Darstellung des distalen Teilschaftes als distalem Implantatsteil; eine perspektivische Darstellung einer Gewindehülse mit Außengewinde; eine perspektivische Darstellung eines Aufbauteilschaftes als proximalem Implantatsteil; eine perspektivische Darstellung eines Schraubbolzens nach der Art einer Explosionszeichnung;
- Figur A2:: eine perspektivische Darstellung des distalen Teilschaftes als distalem Implantatsteil; eine perspektivische Darstellung einer Gewindehülse mit Außengewinde; eine perspektivische Darstellung eines Aufbauteilschaftes als proximalem Implantatsteil nach der Art einer Explosionszeichnung in detaillierter Form;
- Figur A3:: eine Darstellung des distalen Teilschaftes als distalem Implantatsteil des Schaftes nach der Art eines Schnittbildes;
- Figur A4:: eine Darstellung des distalen Teilschaftes als distalem Implantatsteil von proximal betrachtet;
- Figur A5:: eine Darstellung des Schaftes mit miteinander verbundener Gewindehülse nach der Art eines Schnittbildes;
- Figur A6:: eine Darstellung der Gewindehülse nach der Art eines Schnittbildes;
- Figur A7:: eine vergrößerte Detailansicht der miteinander verbundenen Gewindepartner;
- Figur A8:: eine Darstellung des Schaftes mit miteinander verbundener Gewindehülse nach der Art eines Schnittbildes als alternative Ausführung zu Figur A5;
- Figur A9:: eine vergrößerte Detailansicht der miteinander verbundenen Gewindepartner als alternative Ausführung zu Figur A7;
- Figur A10:: eine perspektivische Darstellung des distalen Teilschaftes als distalem Implantatsteil; eine perspektivische Darstellung einer Gewindehülse mit der Außenform einer Keilwelle; eine perspektivische Darstellung eines Verschlusskörpers, eine perspektivische Darstellung eines Aufbauteilschaftes als proximalem Implantatsteil; eine perspektivische Darstellung eines Schraubbolzens nach der Art einer Explosionszeichnung;
- Figur A11:: eine perspektivische Darstellung des distalen Teilschaftes als distalem Implantatsteil; eine perspektivische Darstellung einer Gewindehülse mit der Außenform einer Keilwelle; eine perspektivische Darstellung eines Aufbauteilschaftes als proximalem Implantatsteil nach der Art einer Explosionszeichnung in detaillierter Form;
- Figur A12:: eine Darstellung einer Gewindehülse von proximal betrachtet;
- Figur A13:: eine Darstellung einer Gewindehülse mit der Außenform einer Keilwelle; eine Darstellung eines Verschlusskörpers nach der Art eines Schnittbildes in detaillierter Form;
- Figur A14:: eine Darstellung des distalen Teilschaftes als distalem Implantatsteil des Schaftes nach der Art eines Schnittbildes;
- Figur A15:: eine Darstellung des Schaftes mit miteinander verbundener Gewindehülse und mit miteinander verbundenem Verschlusskörper nach der Art eines Schnittbildes;
- Figur A16:: eine Darstellung des distalen Teilschaftes mit seinen Bestandteilen, nämlich proximalem und distalem Teilschaft, Gewindehülse mit der Außenform einer Keilwelle, Verschlusskörper, Dichtkörper sowie Schraubbolzen zum Verbinden der Teilschäfte zum Schaft;

Bei dem in den Ausführungsbeispielen der Erfindung abgebildeten zweiteiligen Zahnimplantat wird ein proximaler Implantatsteil von einem Aufbauteilschaft 110 und ein distaler Implantatsteil von einem distalen Teilschaft 120 gebildet. Bei der Montage bilden der Schraubbolzen 160 und die Gewindehülse 140 diejenigen Teile, welche den in Längsrichtung verlaufenden Kraftschluss zwischen dem Aufbauteilschaft und dem distalen Teilschaft herstellen (siehe Figur A1).

Wie der in Figur A2 wiedergegebenen perspektivischen Darstellung der Gewindehülse 140 zu entnehmen ist, besitzt diese eine Außengeometrie mit Außengewinde. Die Gewindehülse weist einen Längsabschnitt 143 auf, in welchem umlaufend um die Gewindehülse, Retentionen in Form von zumindest einer Vertiefung 148a in die Gewindegänge eingelassen sind.

In Figur A3 ist der distale Teilschaft 120 geschnitten dargestellt. Dieser besitzt eine zu seinem proximalen Ende 122 hin offene Längsöffnung in Form eines Rücksprungs oder einer Ausnehmung mit einer Innenwandung, die sich über den Längsabschnitt 121 erstreckt und die Grundgeometrie eines Innengewindes aufweist. In die Wandung des Innengewindes sind im Bereich des Längsabschnittes 123, umlaufend um die Längsachse (Z-Achse) des distalen Teilschaftes Retentionen in Form von zumindest einer Vertiefung 128a eingelassen. Der Anschlag bzw. die (Anschlag-)Fläche 129 bildet den Tiefenanschlag für die einzuschraubende Gewindehülse (siehe auch Figur A4 in der der distale Teilschaft von proximal dargestellt ist).

In Figur A5 ist die mit dem distalen Teilschaft 120 verbundene Gewindehülse 140 geschnitten dargestellt. Die Fläche 149 der Gewindehülse hat Kontakt mit der Fläche 129 des distalen Implantatteils. Im Längsabschnitt 128 und 148 (siehe auch Figur A6) der verbundenen Komponenten bilden die gegenüber liegenden Vertiefungen 128a und 148a einen Raum für den Gewindekleber.

In Figur A6 ist die Gewindehülse 140 geschnitten dargestellt. Diese besitzt eine zu ihrem proximalen Ende offene Längsöffnung 142 in Form eines Rücksprungs oder einer Ausnehmung mit einer Innenwandung die vorzugsweise die Grundgeometrie eines Innengewindes nach DIN 13-M 2 aufweist, welches sich über den Längsabschnitt 147 erstreckt. Der oberste Bereich der Titanhülse ist bei der Verbindung einer Gewindehülse mit dem distalen Implantatsteil, bei dem die Flächen 141 der Gewindehülse mit der proximalen Begrenzung des Längsabschnitts 121 des distalen Implantatsteils auf einem gleichen Niveau liegen, noch nicht vollständig am Keramikgewinde abgestützt. Um zu vermeiden, dass der Schraubbolzen im obersten Bereich des Innengewindes der Gewindehülse die Gewindegänge etwas herauszieht, ist der Ansatz des Innengewindes ausgehend von der Fläche 141, welche die proximale Begrenzung der Gewindehülse darstellt, über die Höhe 146 von etwa einem Gewindegang in Richtung distal versetzt bzw. verlegt. Dadurch wird ein besserer Kraftfluss von dem Schraubbolzen über das Innengewinde der Gewindehülse zu dem Hülsenkörper h₂, weiter zu dem Aussengwinde der Gewindehülse bis zum Innengewinde des distalen Implantatsteils erreicht. Das Gewindeprofil 143 ist symmetrisch gestaltet. In Figur A6 und A7 ist die Gewindeart eines modifizierten Rundgewindes detailliert dargestellt. Es ist zu erkennen, wie gering die Wandstärke der Gewindehülse h₂ dimensioniert ist.

In Figur A7 ist zu erkennen, dass in Folge des Verbindens der Teilschäfte miteinander, die Gewindehülse durch das Anziehen des Schraubbolzens, mit ihren nach proximal gerichteten Gewindeflanken k an die nach distal gerichteten Gewindeflanken des Implantatteils K, gepresst werden und somit die Kontaktflächen Kd entstehen. Über diese Kontaktflächen wird die Montagekraft vom Außengewinde der Gewindehülse auf das Innengewinde des distalen Implantatsteils übertragen. Die Übergänge zwischen den in Richtung proximal gerichteten Gewindeflanken K und der Außenfläche des Innengewindes, welche den Innengewinde-Außen-Durchmesser D des distalen Implantatteils 120 definieren, sind über den Längsabschnitt Rd1 mit dem Radius R₁ verrundet gestaltet. Dieser Radius beträgt zweckmäßigerweise im wesentlichen 0,1 mm. Die Übergänge zwischen den in Richtung distal gerichteten Gewindeflanken k und der Innenfläche des Außengewindes, welche den Außengewinde-InnenDurchmesser d₁ der Gewindehülse 140 definieren, sind über die Längsabschnitt rd₂ mit dem Radius r₂ verrundet gestaltet. Dieser Radius beträgt zweckmäßigerweise im wesentlichen 0,05 mm. Die Gewindesteigung ist mit P bezeichnet. Der Abstand zwischen dem Außengewinde-Innen-Durchmesser d₁, der Gewindehülse 140 und dem Innengewinde-Innen-Durchmesser D₁ des distalen Implantatteils 120 bildet das Axialspiel der Gewindepaarung. Der Abstand zwischen dem Außengewinde-Außen-Durchmesser d, der Gewindehülse 140 und dem Innengewinde-Außen-Durchmesser D des distalen Implantatteils 120 bildet das Spitzenspiel der Gewindepaarung. Die Flankenwinkel FWa und FWb besitzen vorzugsweise das gleiche Winkelmaß, wodurch sich ein symmetrisches Gewindeprofil ergibt. Die Flankenhöhe des Außengewindes der Gewindehülse 140 ist mit h₁ bezeichnet, die Flankenhöhe dessen Innengewindes ist mit h₃ bezeichnet. Die Flankenhöhe des Innengewindes des Implantatteils 120 ist mit H₁ bezeichnet.

Wie der in Figur A8 wiedergegebenen perspektivischen Darstellung der Gewindehülse 140 zu entnehmen ist, besitzt diese eine Außengeometrie mit Außengewinde. In Figur A8 ist als Ausführungsvariante die mit dem distalen Teilschaft 120' verbundene Gewindehülse 140' dargestellt. Passend zu der Außengeometrie der Gewindehülse 140', welche als Außengewinde mit der Gewindeart eines verrundeten modifizierten Sägegewindes gestaltet ist, besitzt das Implantatsteil 120' eine zu ihrem proximalen Ende offene Längsöffnung 142' in Form eines Rücksprungs oder einer Ausnehmung mit der Innengeometrie eines Innengewindes mit der Gewindeart eines verrundeten modifizierten Sägegewindes.

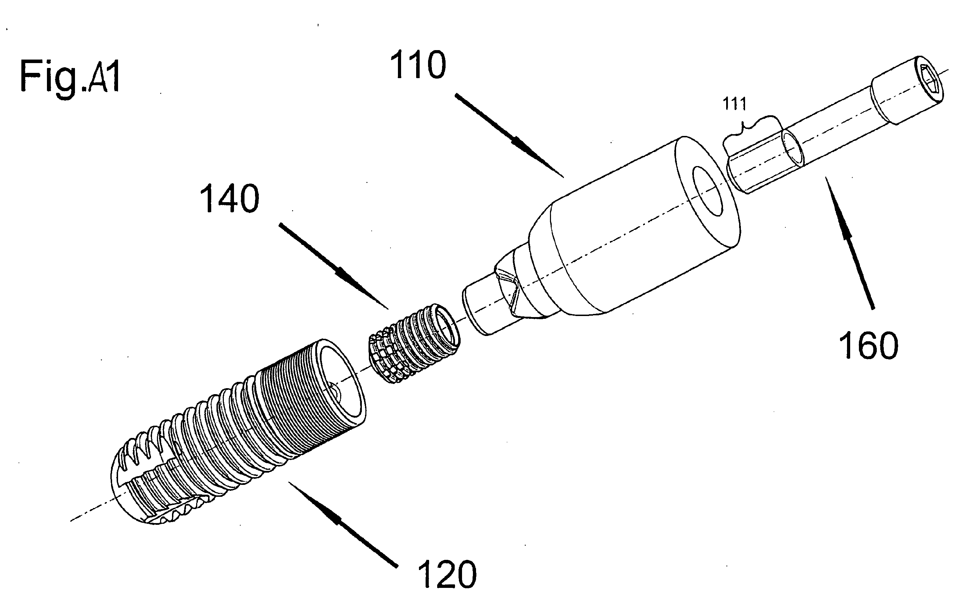

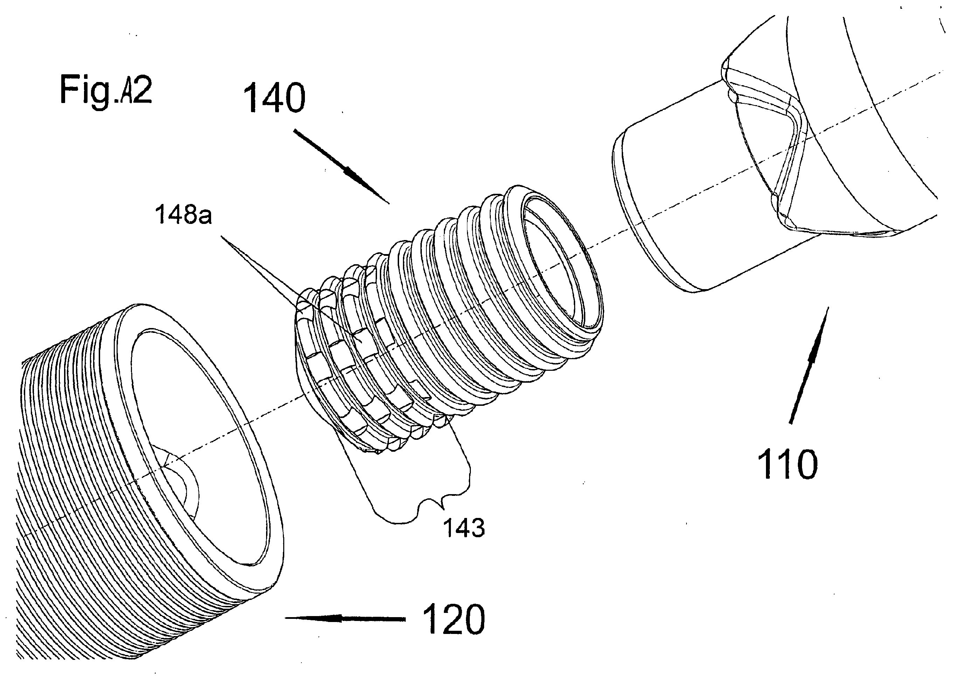

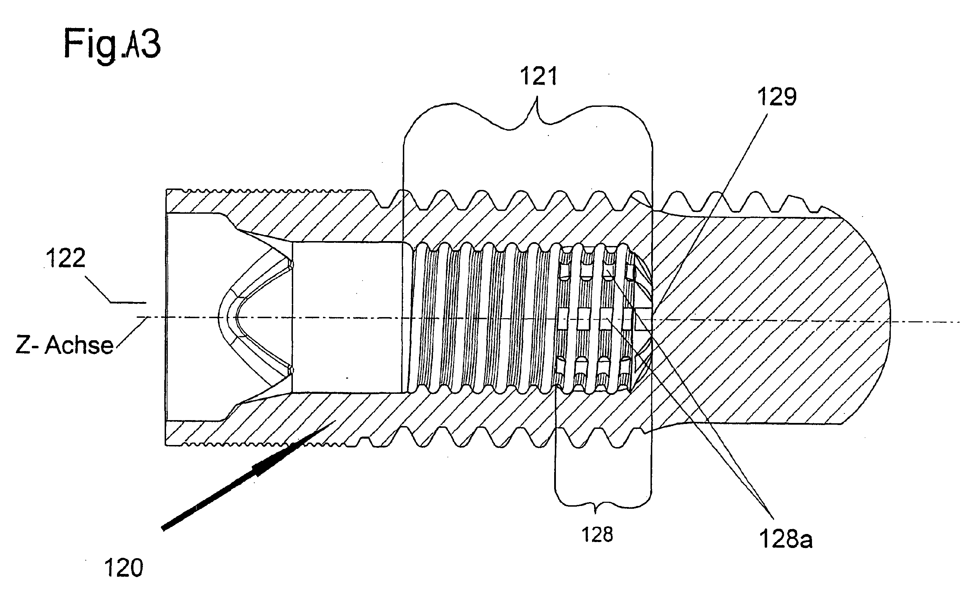

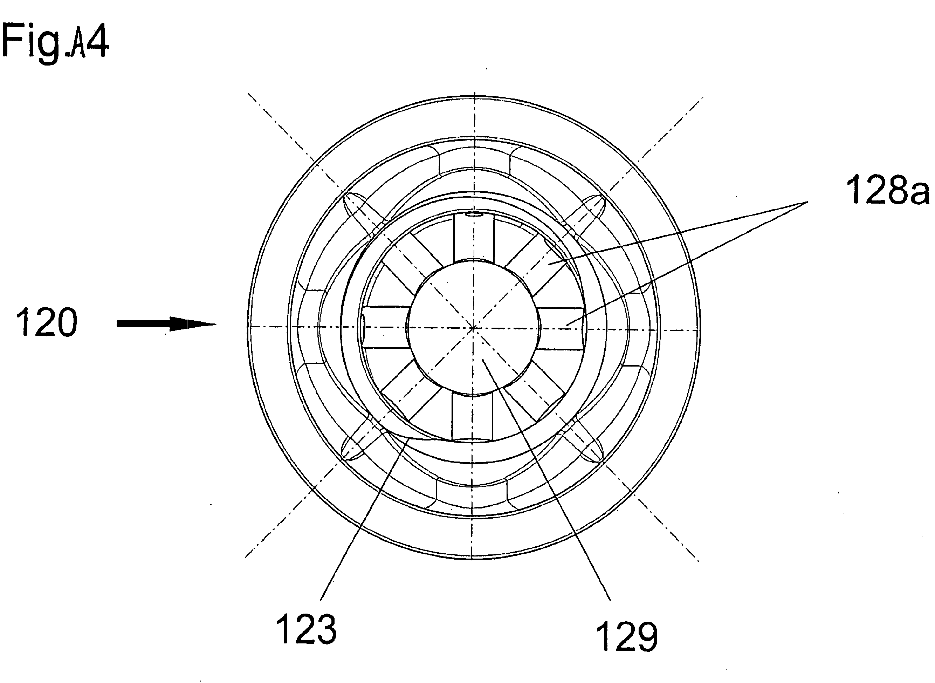

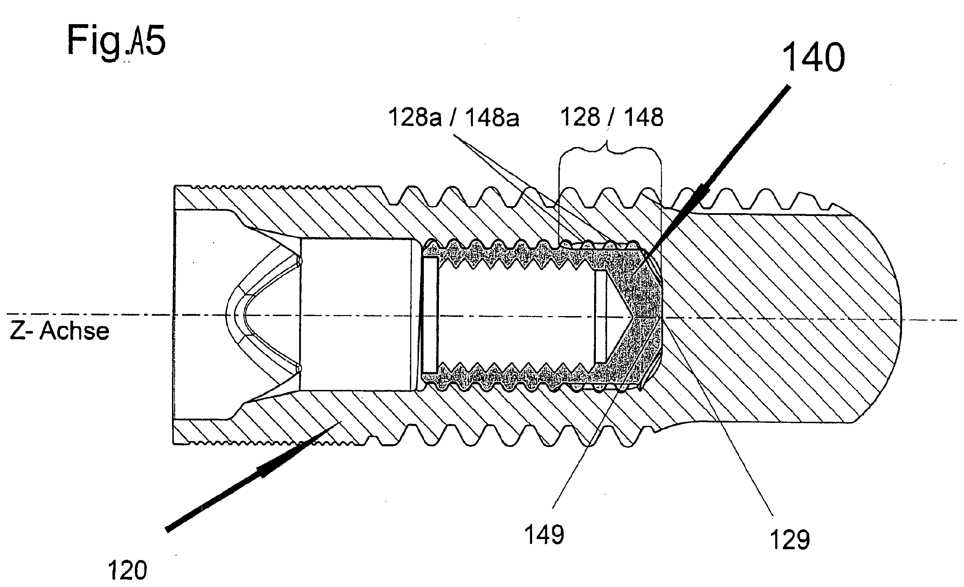

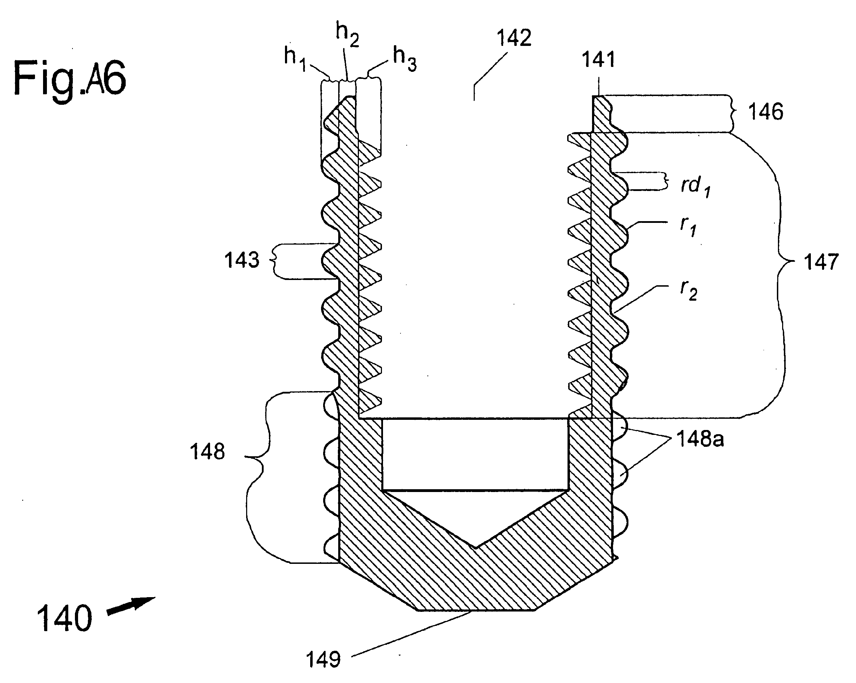

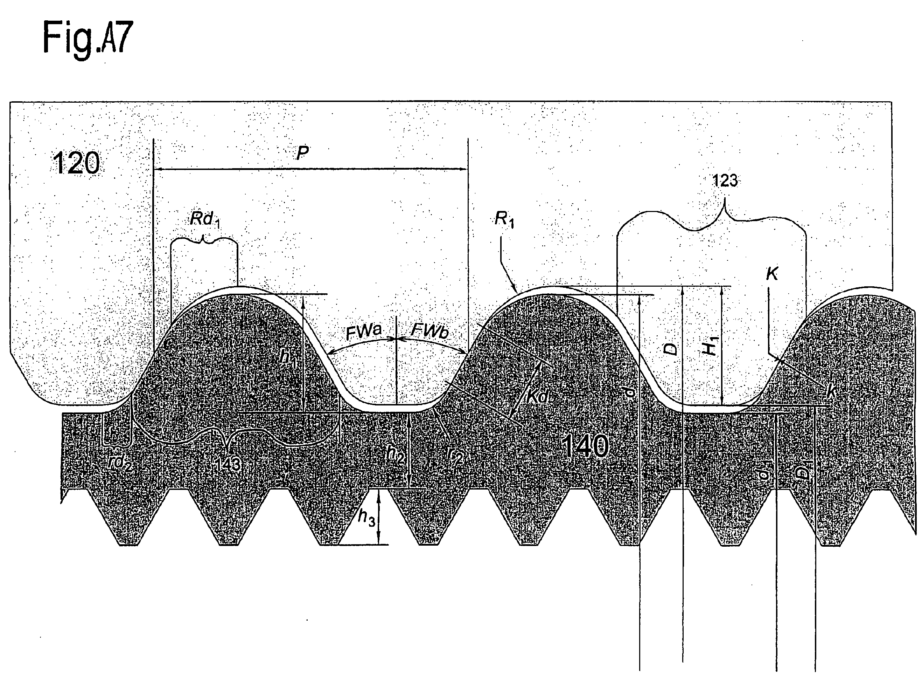

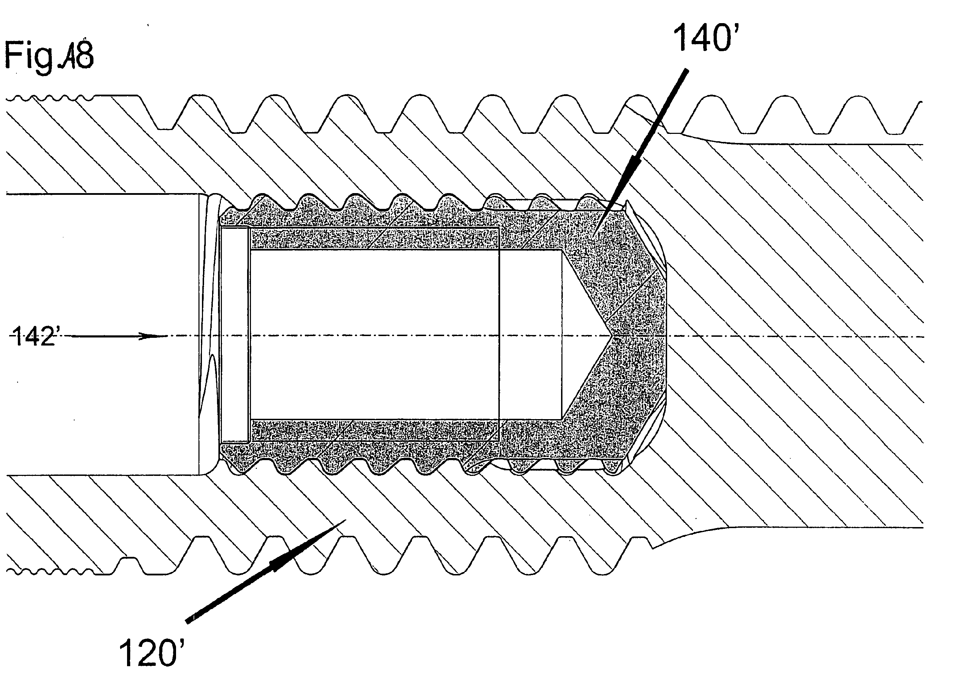

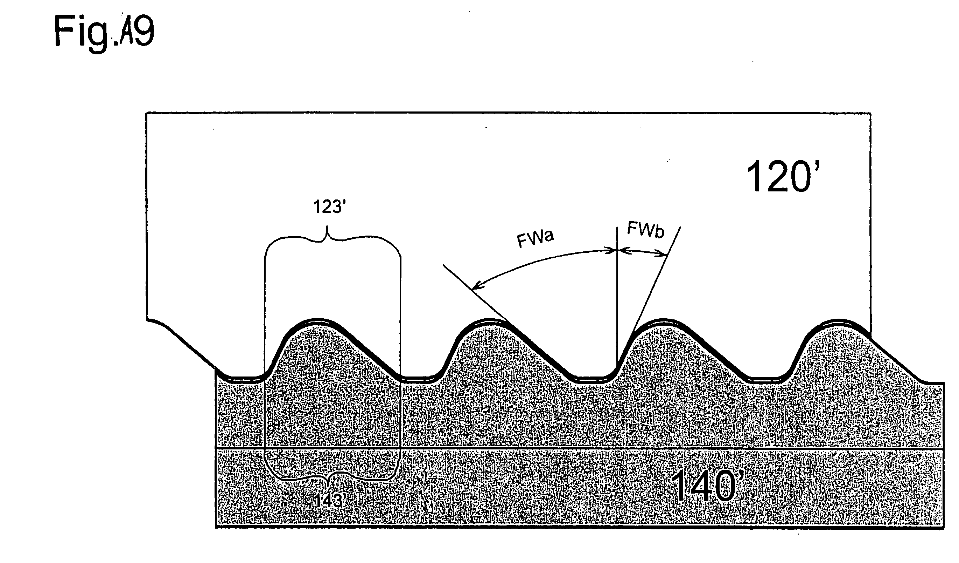

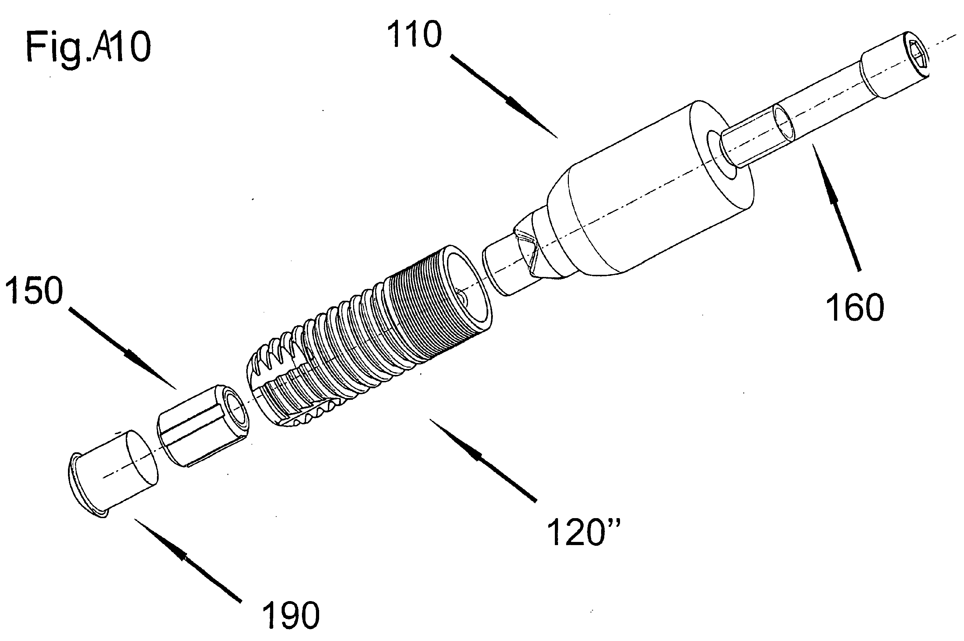

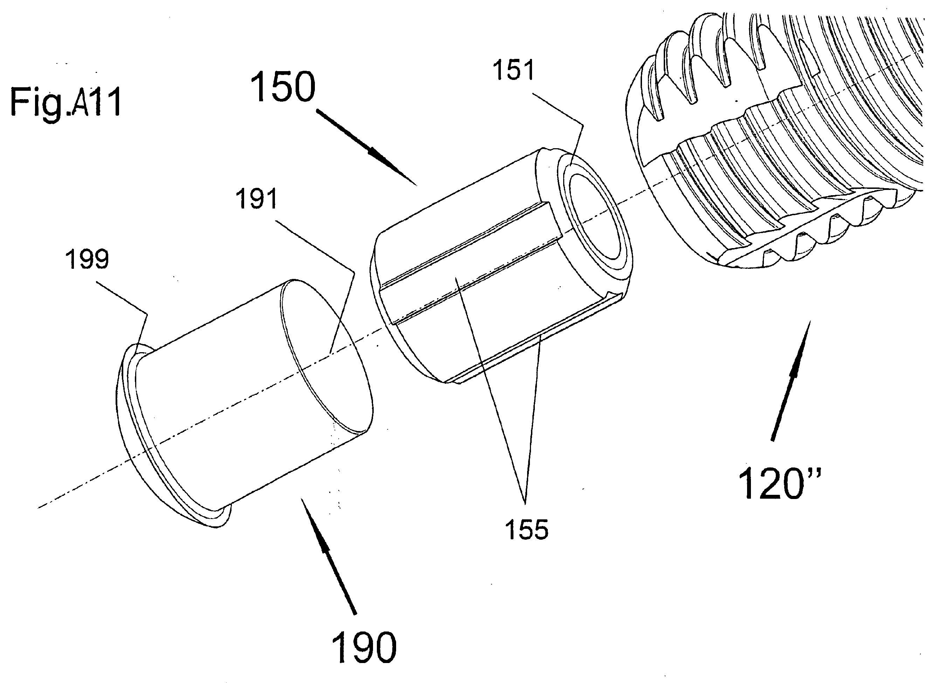

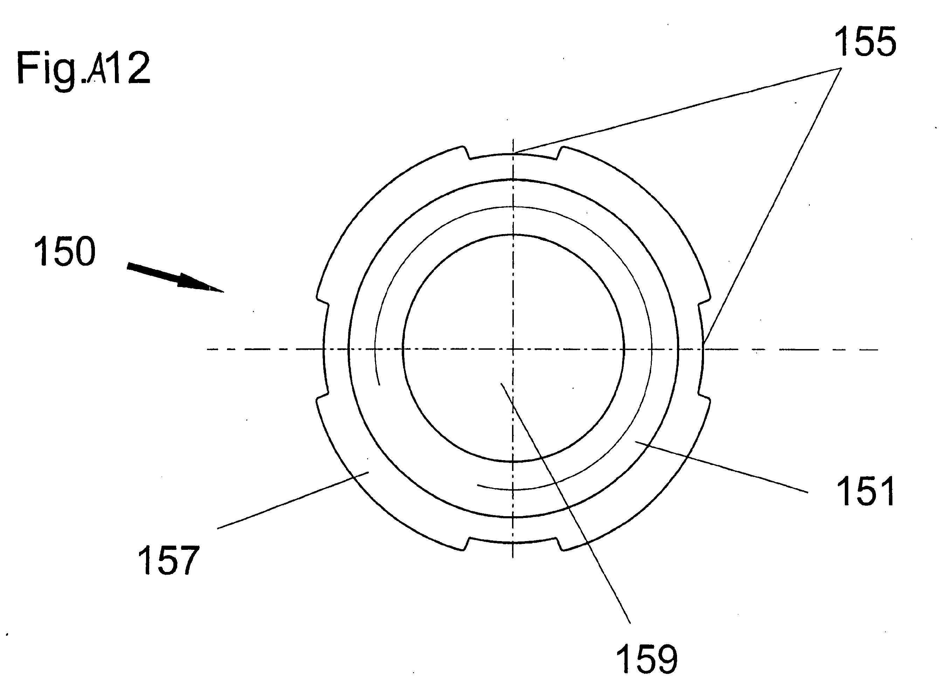

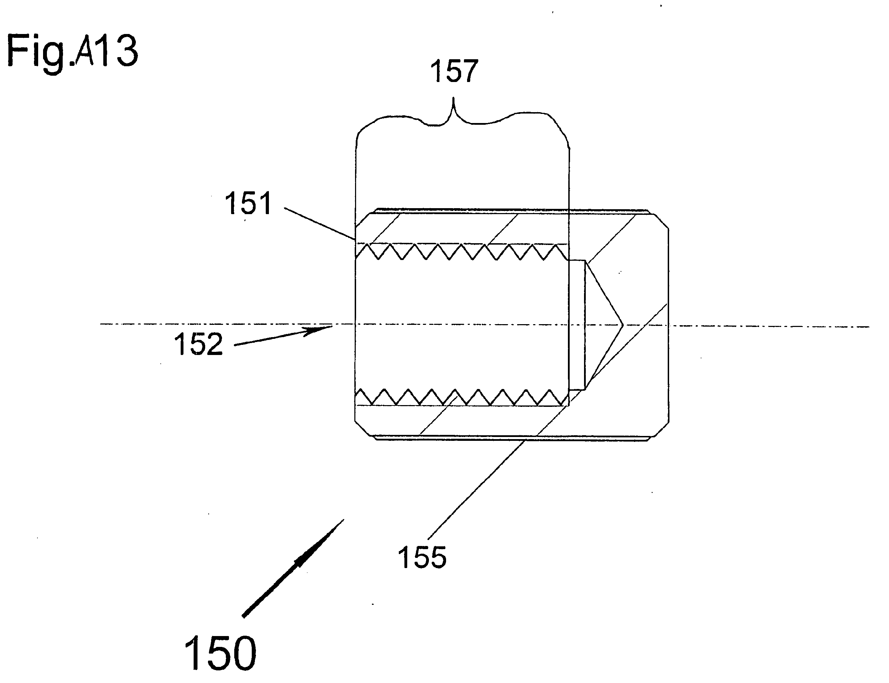

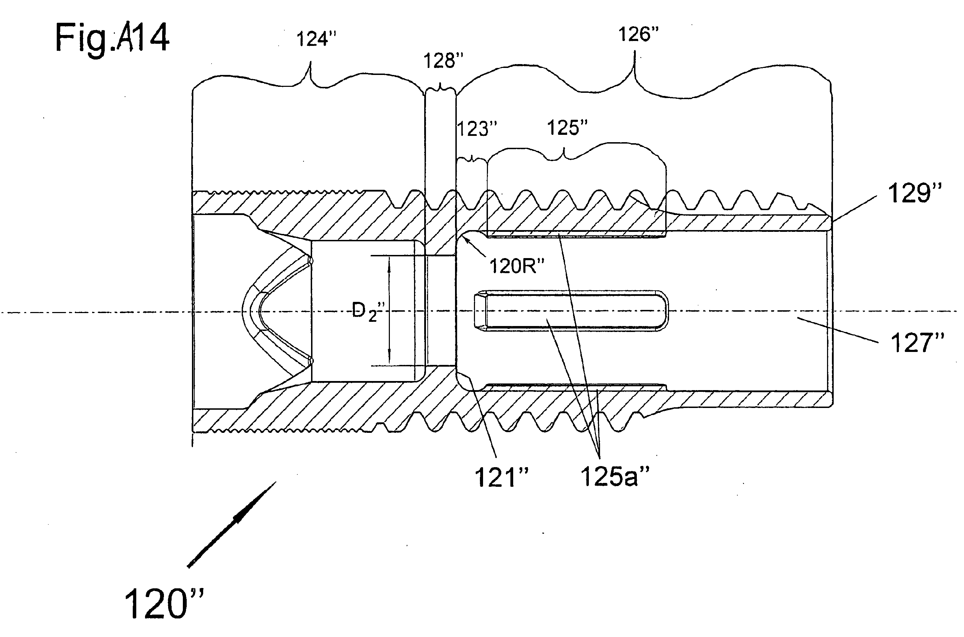

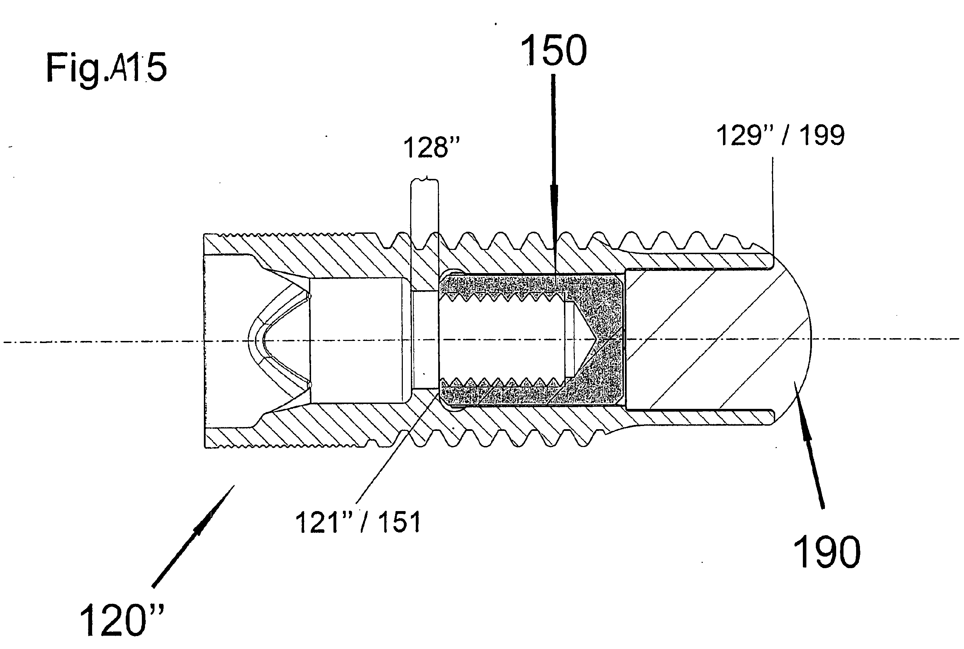

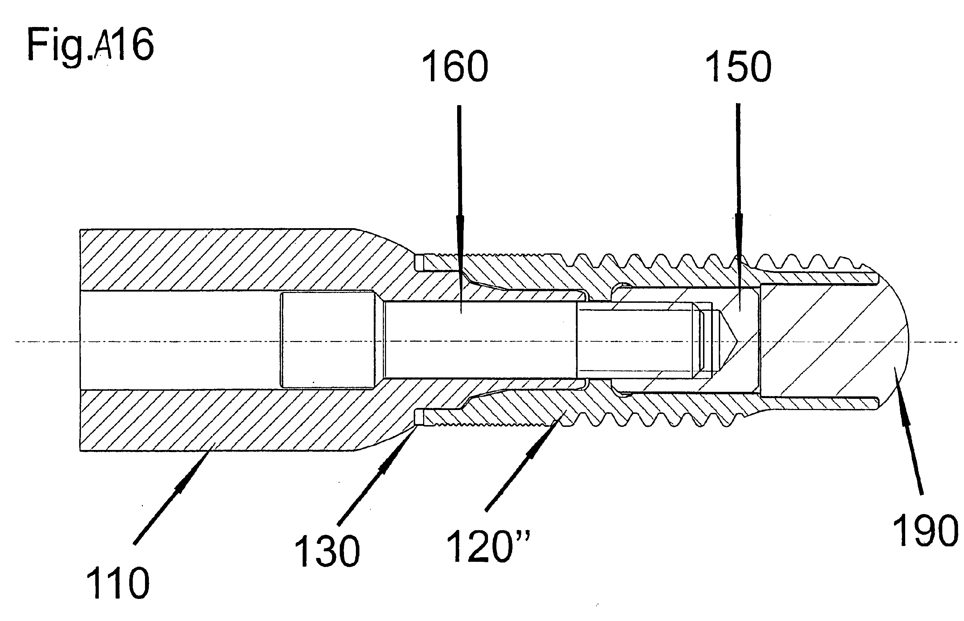

In Figur A9 ist diese Ausführungsvariante der Gewindeart des verrundeten modifizierten Sägegewindes detailliert dargestellt. Es ist zu erkennen, dass die nach proximal gerichteten Flankenwinkel FWa von 120' und 140' größer bzw. flacher sind als die nach distal gerichteten Flankenwinkel FWb. Diese asymmetrischen Ausführungen der Gewindepofile 143' und 123' stellen den wesentlichen Unterschied zu den bereits in Figur A1 bis A7 beschrieben und bevorzugten symmetrischen Ausführungen der Gewindprofile 143 der Gewindehülse 140 und 123 des distalen Implantatteils 120 (siehe die Figuren 6 und 7) als modifiziertes Rundgewinde dar.

Wie den in den Figuren A10 und A11 wiedergegebenen perspektivischen Darstellungen der Gewindehülse 150 zu entnehmen ist, besitzt diese weitere Ausführungsvariante der Gewindehülse eine Außengeometrie in Form einer Keilwelle. Die Gewindehülse weist über ihre gesamte Länge hinweg flächige Vertiefungen 155 auf, die vorzugsweise symmetrisch und/oder im gleichen Abstand voneinander um den Umfang der Gewindehülse 150 angeordnet bzw. verteilt sind (siehe auch die Figuren A12 und A13). Beim Verbinden des Verschlusskörpers 190 mit dem distalen Implantatsteil 120" gleitet die Außenwandung des Verschlusskörpers beim weiteren Einbringen in das distale Ende des distalen Implantatsteils (bzw. dessen distaler Längsöffnung), bis er seine axiale Endposition an einander zugewandten Anschlagflächen erreicht. In den Figuren A10, A11, A14, A15 und A16 ist wiedergegeben, dass der Verschlusskörper 150 eine in Richtung proximal gerichtete Anschlagfläche 199 besitzt, welche beim Verbinden des Verschlusskörpers mit dem distalen Implantatsteil seine axiale Begrenzung an der gegenüberliegenden nach distal gerichteten Anschlagfläche 129" des distalen Implantatteils 120" findet.

In Figur A13 ist die Gewindehülse 150 geschnitten dargestellt. Diese besitzt eine zu ihrem proximalen Ende offene Längsöffnung 152 in Form einer Ausnehmung bzw. eines Rücksprungs mit einer Innenwandung die vorzugsweise die Grundgeometrie eines Innengewindes nach DIN 13-M 2 aufweist, welches sich über den Längsabschnitt 157 erstreckt. Das proximale Ende der Gewindehülse 150 bildet die Anschlagfläche 151.

In Figur A14 ist dargestellt, wie die Längsöffnung des distalen Implantatsteils 120", welche eine Grundgeometrie mit vorzugsweise kreisförmigem Querschnitt aufweist, im Bereich des Längsabschnittes 128" eine Querschnittsverjüngung D₂" aufweist. Diese Querschnittsverjüngung trennt die Längsabschnitte 124" und 126". Die nach distal gerichtete Wand 121" der Querschnittsverjüngung D₂" begrenzt den Längsabschnitt 126" in Richtung proximal und bildet eine Anschlagsfläche bzw. einen Höhenanschlag für die Gewindehülse 150. An der Innenwandung 127" der distalen Längsöffnung des distalen Implantatsteils sind vorzugsweise symmetrisch und/oder im gleichen Abstand voneinander um den Umfang und/oder über die gesamte Länge des Längsabschnittes 125" flächige Vorsprünge 125a" angeordnet. Diese Flächigen Vorsprünge sind passend zu den flächigen Vertiefungen 155 gestaltet, die symmetrisch und im gleichen Abstand voneinander um den Umfang der gesamten Länge der Gewindehülse 150 hinweg angeordnet sind. Wenn der distale Teilschaft 120" und die Gewindehülse miteinander verbunden sind (siehe die Figuren A15 und A16), ist die relative Position der beiden Teile sowohl in axialer Richtung als auch in rotatorischer Richtung durch eng aufeinander aufliegende Flankenflächen 155 beziehungsweise 125a" genauestens definiert.

Die Geometrie des distalen Implantatsteils und der Gewindehülse ist im Bereich der Verbindung zwischen beiden Schaftteilen vorzugsweise derart gestaltet, dass die Verbindung verdrehsicher ist. Andere Formen der Gestaltung einer Verdrehsicherung als die der Keilwelle sind möglich.

Beim Verbinden der Gewindehülse mit dem distalen Implantatsteil gleiten die Außenwandungen der Gewindehülse beim weiteren Einbringen in das distale Ende des distalen Implantatsteils bis sie mit ihrer Anschlagfläche 151 ihre axiale Begrenzung an der gegenüberliegenden nach distal gerichteten Anschlagfläche 121" des distalen Implantatteils 120" (siehe auch die Figuren A14 und A15) erreicht.

Der Übergang zwischen der nach distal gerichteten Wand 121" des distalen Implantatteils 120" und der Außenfläche 127" dessen distaler Längsöffnung ist verrundet gestaltet, vorzugsweise mit einem Radius von im wesentlichen 0,3 mm. Diese Verrundung 120R" senkt die beim Übertragen der Montagekraft vom Schraubbolzen 160 über die proximale Begrenzung der Gewindehülse 150 auf die nach distal gerichteten Wand 121" des distalen Implantatteils 120" auftretenden Kerbspannungen im Bereich der Querschnittsverjüngung D₂" des Längsabschnittes 128" des distalen Implantatsteils auf ein Materialverträgliches Maß ab. Um den Radius 120R" möglichst groß zu dimensionieren, ist im Bereich des Längsabschnittes 123" zweckmäßigerweise ein Freistich, der vorteilhafterweise nach DIN 509- E ausgebildet ist, angebracht, der die Vorsprünge 125a" des distalen Implantatteils 120" in diesem Bereich entfernt.

In Figur A16 sind die wesentlichen Bestandteile des Schaftes für ein Zahnimplantat in einer Querschnittsansicht dargestellt. Diese sind die Gewindehülse 150, der proximale Aufbauteilschaft 110, das distale Implantatsteil 120", der Dichtkörper 130 zum Abdichten des Übergangs zwischen proximalem und distalem Teilschaft, der Schraubbolzen 160, der dem Verschrauben von proximalem und distalem Implantatsteil dient und der Verschlusskörper 190.

Bevorzugterweise weist der Verschlusskörper 190 in Richtung proximal gerichtete Anschlagflächen 199 auf, welche die Tiefe des Eindringens des Verschlusskörpers 190 in das distale Implantatsteil 120" an dessen gegenüberliegenden Anschlagflächen 129" begrenzen.

Weiterhin bevorzugterweise weist das distale Implantatsteil 120" in Richtung distal gerichtete Anschlagflächen 129" auf, welche die Tiefe des Eindringens des Verschlusskörpers 190 in das distale Implantatsteil 120" an den gegenüberliegenden Anschlagflächen 199" des Verschlusskörpers 190 begrenzen.

Weiterhin ist der sich zwischen den Wandungen 129" und 199 ergebende Montagespalt vorteilhafterweise mit einem biokompatiblen Material, vorzugsweise Glas, Keramik oder Kunststoff, verschlossen. Dieses kann mittels eines thermischen und/oder chemischen Prozesses in den Montagespalt eingebracht sein.

## Patentansprüche

1. Verbundsystem umfassend ein zweiteiliges Zahnimplantat mit einem ersten distalen Implantatsteil (120, 120', 120") und einem zweiten proximalen Implantatsteil (110), die in einem miteinander verbundenen Zustand an einer Verbindungsstelle wenigstens mittelbar aneinander angrenzen und vorzugsweise im Berelch der Verbindungsstelle einander zugewandte Oberflächen aufweisen,
wobei in dem ersten Implantatsteil ein Verbindungselement vorzugsweise in Form einer Gewindehülse (140, 140', 150) eingebracht ist, und
wobei zwischen dem ersten Implantatsteil (120, 120', 120") und dem Verbindungselement (140, 140', 150) einander zugewandte Anschlagflächen (K, k, 121", 151) vorgesehen sind, die bei der Montage und bei fertig montiertem Zahnimplantat die Montagekräfte von dem Verbindungselement (140, 140', 150) auf das erste Implantatsteil (120, 120', 120") übertragen,
**dadurch gekennzeichnet**
**dass** die Übergänge zwischen den in proximaler Richtung gerichteten Gewindeflanken (*K*) und der Außenfläche (*D*) des Innengewindes des ersten Implantatteils (120, 120') mit einem Radius (R₁) von im wesentlichen zumindest 0,05mm verrundet gestaltet sind, und/oder
**dass** die Übergänge zwischen den distal ausgerichteten Gewindeflanken (*k*) und den Innenflächen (*d*₁) des Außengewindes des Verbindungselements (140, 140') mit einem Radius (*r*₂) von im wesentlichen zumindest 0,01 mm verrundet gestaltet sind.

2. Verbundsystem nach Anspruch 1, wobel der erste Implantatsteil (120, 120', 120") zumindest einen Rücksprung bzw. eine Ausnehmung aufweist, um das Verbindungselement (140, 140', 150) aufzunehmen.

3. Verbundsystem nach Anspruch 2, wobei die Ausnehmung an einem proximalen Endbereich des ersten Implantatsteils (120, 120') vorgesehen ist, um das Verbindungselement (140, 140') vorzugsweise im wesentlichen in Längsrichtung des ersten Implantatsteils (120, 120') zumindest teilweise darin aufzunehmen.

4. Verbundsystem nach einem der Ansprüche 2 oder 3, wobei das Verbindungselement (140, 140') an seiner Außenwandung und/oder das erste Implantatsteil (120, 120') an seiner Innenwandung der Ausnehmung die Oberflächenkonfiguration eines modifizierten Rundgewindes und/oder eines verrundeten modifizierten Sägengewindes aufweist.

5. Verbundsystem nach einem der Ansprüche 2 - 4, wobei die Flankenwinkel (FWa, FWb) zweier benachbarter Gewindeflanken des Innengewindes des ersten Implantatteils (120) und/oder die Flankenwinkel zweier benachbarter Gewindeflanken des Außengewindes des Verbindungselements (140) im wesentlichen das gleiche Winkelmaß aufweisen.

6. Verbundsystem nach einem der Ansprüche 2 - 4, wobei die Flankenwinkel (FWa) der proximal ausgerichteten Gewindeflanken des Innengewindes des ersten Implantatteils (120') und/oder die Flankenwinkel der proximal ausgerichteten Gewindeflanken des Außengewindes des Verbindungselements (140') im wesentlichen größer bzw. flacher ausgerichtet sind als die Flankenwinkel (FWb) der distal ausgerichteten Gewindeflanken des Innengewindes des ersten Implantatteils (120') und/oder die Flankenwinkel der distal ausgerichteten Gewindeflanken des Außengewindes des Verbindungselements (140').

7. Verbundsystem nach Anspruch 2, wobei die Ausnehmung an einem distalen Endbereich des ersten Implantatsteils (120") vorgesehen ist, um das Verbindungselement (150) vorzugsweise im wesentlichen in Längsrichtung des ersten Implantatsteils (120") zumindest teilweise darin aufzunehmen.

8. Verbundsystem nach Anspruch 7, wobei das Verbindungselement (150) an seiner Außenwandung und/oder das erste Implantatsteil (120") an seiner Innenwandung der Ausnehmung die Oberflächenkonfiguration eines modifizierten Rundgewindes und/oder eines verrundeten modifizierten Sägengewindes aufwelst.

9. Verbundsystem nach Anspruch 7. wobei das Verbindungselement (150) an seiner Außenwandung zumindest einen, vorzugsweise eine Vielzahl von im wesentlichen in Längsriohtung angeordneten Rücksprüngen (155), wie Nuten oder Keilwellenrücksprüngen, aufweist, welche ausgelegt sind, mit entsprechenden an der Innenwandung des ersten Implantatsteil (120") vorgesehenen Vorsprüngen (125a") in Eingriff zu gelangen bzw, stehen.

10. Verbundsystem nach einem der Ansprüche 7 - 9, wobei das ersten erste Implantatsteils (120") vorzugsweise als Hohlzylinder ausgebildet ist und die Ausnehmung des ersten Implantatsteils (120") eine Querschnittsverjüngung (128") aufweist, deren distal ausgerichtete Fläche (121") einen Anschlag bzw. ein(e) Widerlager(fläche) für das Verbindungselement (150) bildet, um die Bewegung des Verbindungselements (150) beim Verbinden der IAV in proximaler Richtung zu begrenzen.

11. Verbundsystem nach Anspruch 10, wobei der Übergang zwischen der distal ausgerichteten Fläche (121") der Querschnittsverjüngung (128") des ersten Implantatteils (120") und der Außenfläche bzw. -wandung (127") der Ausnehmung mit einem Radius (120 R") von im wesentlichen zumindest 0,05mm verrundet gestaltet ist.

12. Verbundsystem nach einem der Ansprüche 10 oder 11, wobei das Verbindungselement (150) eine im wesentlichen proximal ausgerichtete Flächen (151) aufweist, die ausgelegt Ist, mit der distal ausgerichteten Fläche (121") des ersten Implantatsteils (120") in Eingriff zu gelangen.

13. Verbundsystem nach einem der Ansprüche 7 - 12, weiterhin aufweisend ein Verschlusselement bzw. einen Verschlusskörper (190), der ausgelegt ist, die nach distal offene Ausnehmung des ersten Implantatteils (120") nach dem Einbringen des Verbindungselement (150) vorzugsweise bakteriendicht zu verschließen.

14. Verbundsystem nach einem der vorhergehenden Ansprüche, wobei das erste Implantatsteil (120, 120', 120") und/oder der Verschlusskörper (190) aus einem biokompatiblen Material ausgebildet sind.

15. Verbundsystem nach einem der vorhergehenden Ansprüche, wobei das Verbindungselement (140, 140', 150) aus einem biokompatiblen Metall oder einer Metaillegierung, vorzugsweise Titan oder einer titanhaltigen Legierung, ausgebildet ist.

## Claims

1. Link system comprising a two piece dental implant having a first distal implant part (120, 120', 120") and a second proximal Implant part (110), which at least indirectly adjoin in a linked state at a connection portion, and having preferably in the area of the connection portion surfaces facing each other,
wherein in the first implant part there is Introduced a connection element in the form of a threaded sleeve (140, 140', 150), and
wherein between the first implant part (120, 120', 20") and the connection element (140, 140', 150) are provided abutment faces (K, k, 121", 151) facing each other, which transfer during mounting and at the ready-made dental implant the mounting forces from the connection element (140, 140', 150) to the first implant part (120, 120', 120"),
**characterized in that**
the transitions between the tread flanks (K) oriented in proximal direction and the outer surface (D) of the inner thread of the first Implant part (120, 20') are formed rounded with a radius (R₁) of substantially at least 0,05 mm, and/or
that the transitions between the distal oriented thread flanks (*k*) and the inner faces (*d*₁) of the outer thread of the connection element (140, 140') are formed rounded with a radius (*r*₂) of substantially at least 0.01 mm.

2. Link system according to claim 1, wherein the first implant part (120, 120', 120") comprises at least one recess or opening for accommodating the connection element (140, 140', 150).

3. Link system according to claim 2, wherein the recess or opening is provided at a proximal end portion of the first implant part (120, 120') for at least partially accommodating the connection element (140, 140') therein preferably substantially in longitudinal direction of the first implant part (120, 120').

4. Link system according to one of claims 2 or 3, wherein the connection element (140, 140') comprises at its outer wall and/or wherein the first implant part (120, 120') comprises at its inner wall of the recess or opening the surface configuration of a modified knuckle thread and/or of a rounded modified buttress thread.

5. Link system according to one of claims 2 - 4, wherein the flank angle (FWa, FWb) of two neighboring thread flanks of the inner thread of the first implant part (120) and/or the flank angle of two neighboring thread flanks of the outer thread of the connection element (140) have substantially the same angular measure.

6. Link system according one to claims 2 - 4, wherein the flank angle (FWa) of the proximal oriented thread flanks of the inner thread of the first implant part (120') and/or the flank angles of the proximal oriented thread flanks of the outer thread of the connection element (140') are oriented substantially bigger or flatter than the flank angles (FWb) of the distal oriented thread flanks of the inner thread of the first implant part (120') and/or the flank angles of the distal oriented thread flanks of the outer thread of the connection element (140').

7. Link system according to claim 2, wherein the recess or opening is provided at a distal end portion of the first implant part (120") for at least partially accommodating the connection element (150) therein preferably substantially in longitudinal direction of the first implant part (120").

8. Link system according to claim 7, wherein the connection element (150) comprises at its outer wall and/or the first implant part (120") comprises at its inner wall of the recess or opening the surface configuration of a modified knuckle thread and/or of a rounded modified buttress thread,

9. Link system according to claim 7, wherein the connection element (150) comprises at its outer wall at least one, preferably a plurality of, recesses (155) oriented substantially in longitudinal direction, such as notches or spline recesses, which are adapted to engage or be engageable with corresponding protrusions (125a") provided at the inner wall of the first implant part (120").

10. Link system according to one of claims 7 - 9, wherein the first implant part (120") is formed preferably as a hollow cylinder and the recess or opening of the first implant part (120") has a tapering of cross-section (128"), of which the distal oriented surface (121") forms an abutment or a counter bearing surface for the connection element (150) for restricting the motion in proximal direction of the connection element (150) during connection of the IAV (Implant abutment connection).

11. Link system according to claim 10, wherein the transition between the distal oriented surface (121") of the cross section tapering (128") of the first implant part (120") and the outer surface or outer wall (127") of the opening or recess is formed rounded with a radius (120 R") of substantially at least 0.05 mm.

12. Link system according to one of claims 10 or 11, wherein the connection element (150) has a surface (151) oriented substantially proximal, which is adapted to engage with the distal oriented surface (121") of the first implant part (120").

13. Link system according to one of claims 7 - 12, further comprising a closure element or closure body (190), which is adapted to seal or close the distally open opening or recess of the first implant part (120") after introducing the connection element (150) in a preferably germ-sealed manner.

14. Link system according to one of the preceding claims, wherein the first implant part (120, 120', 120") and/or the seal body (190) are formed from a biocompatible material.

15. Link system according to one of the preceding claims, wherein the connection element (140, 140', 150) is formed from a biocompatible metal or a metal alloy, preferably Titanium or an alloy containing Titanium.

## Revendications

1. Système composite incluant un implant dentaire en deux parties avec une première partie d'implant distale (120, 120', 120") et avec une seconde partie d'implant proximale (110) qui, dans un état reliées l'une à l'autre au niveau d'un emplacement de liaison, sont au moins indirectement mutuellement adjacentes et présentent de préférence dans la région de l'emplacement de liaison des surfaces tournées l'une vers l'autre,
dans lequel un élément de liaison, de préférence sous la forme d'une douille à pas de vis (140, 140', 150), est intégré dans la première partie d'implant, et
dans lequel, entre la première partie d'implant (120, 120', 120") et l'élément de liaison (140, 140', 150), il est prévu des surfaces de butée (K, k, 121", 151) tournées l'une vers l'autre qui, lors du montage et lorsque l'implant dentaire est finalement montré, transmettent les forces de montage depuis l'élément de liaison (140, 140', 150) vers la première partie d'implant (120, 120', 120"),
**caractérisé en ce que**
les transitions entre les flancs (K) de pas de vis tournés en direction proximale et la surface extérieure (D) du pas de vis intérieur de la première partie d'implant (120, 120') sont réalisées arrondies avec un rayon (R1) essentiellement d'au moins 0,05 mm, et/ou les transitions entre les flancs (k) de pas de vis tournés en direction distale et les surfaces intérieures (d1) du pas de vis extérieur de l'élément de liaison (140, 140') sont réalisées arrondies avec un rayon (r2) essentiellement d'au moins 0,01 mm.

2. Système composite selon la revendication 1, dans lequel la première partie d'implant (120, 120', 120") comporte au moins un ressaut ou un évidement, afin de recevoir l'élément de liaison (140, 40', 150).

3. Système composite selon la revendication 2, dans lequel l'évidement est prévu au niveau d'une zone d'extrémité proximale de la première partie d'implant (120, 120'), afin de recevoir au moins partiellement à l'intérieur l'élément de liaison (140, 140'), de préférence essentiellement en direction longitudinale de la première partie d'implant (120, 120').

4. Système composite selon l'une des revendications 2 ou 3, dans lequel l'élément de liaison (140, 144') comporte au niveau de sa paroi extérieure, et/ou la première partie d'implant (120, 120') comporte au niveau de sa paroi intérieure de l'évidement, la configuration de surface d'un pas de vis à arrondi modifié et/ou d'un pas de vis en dents de scie modifié arrondi.

5. Système composite selon l'une des revendications 2 à 4, dans lequel les angles de flancs (FWa, FWb) de deux flancs de pas de vis voisins du pas de vis intérieur de la première partie d'implant (120) et/ou les angles de flancs de deux flancs de pas de vis voisins du pas de vis extérieur de l'élément de liaison (140) présentent sensiblement la même mesure angulaire.

6. Système composite selon l'une des revendications 2 à 4, dans lequel les angles de flancs (FWa) des flancs dirigés en direction proximale du pas de vis intérieur de la première partie d'implant (120') et/ou les angles de flancs des flancs dirigés en direction proximale du pas de vis extérieur de l'élément de liaison (140') sont sensiblement plus grands, ou respectivement orientés de façon plus aplatie que les angles de flancs (FWb) des flancs dirigés en direction proximale du pas de vis intérieur de la première partie d'implant (120') et/ou que les angles de flancs des flancs dirigés en direction distale du pas de vis extérieur de l'élément de liaison (140').

7. Système composite selon la revendication 2, dans lequel l'évidement est prévu au niveau d'une région d'extrémité distale de la première partie d'implant (120"), afin de recevoir au moins partiellement à l'intérieur l'élément de liaison (150), de préférence essentiellement en direction longitudinale de la première partie d'implant (120").

8. Système composite selon la revendication 7, dans lequel l'élément de liaison (150) comporte sur sa paroi extérieure et/ou la première partie d'implant (120") comporte sur sa paroi intérieure de l'évidement, la configuration de surface d'un pas de vis arrondi modifié et/ou d'un pas de vis en dents de scie arrondi modifié.

9. Système composite selon la revendication 7, dans lequel l'élément de liaison (150) comporte sur sa paroi extérieure au moins un ressaut (155), de préférence une pluralité de ressauts, agencé(s) sensiblement en direction longitudinale, tels que des gorges ou des ressauts formant des ondes en coin, qui sont conçus pour venir en engagement ou pour être en engagement avec des saillies correspondantes (125a") prévues sur la paroi intérieure de la première partie d'implant (120").

10. Système composite selon l'une des revendications 7 à 9, dans lequel la première partie d'implant (120") est réalisée de préférence sous forme de cylindre creux et l'évidement de la première partie d'implant (120") présente un rétrécissement de section transversale (128"), dont la surface orientée en direction distale (121") forme une butée ou une surface de contrebutée pour l'élément de liaison (150), afin de limiter le mouvement de l'élément de liaison (150) lors de la liaison du [IAV] en direction proximale.

11. Système composite selon la revendication 10, dans lequel la transition entre la surface (121") orientée en direction distale du rétrécissement de section transversale (128") de la première partie d'implant (120") et la surface ou la paroi extérieure (127") de l'évidement est conçue arrondie avec un rayon essentiellement d'au moins 0,05 mm.

12. Système composite selon l'une des revendications 10 ou 11, dans lequel l'élément de liaison (150) comporte une surface (151) orientée sensiblement en direction proximale, qui est conçue pour venir en engagement avec la surface (121") orientée en direction distale de la première partie d'implant (120").

13. Système composite selon l'une des revendications 7 à 12, comprenant en outre un élément ou un corps de fermeture (190) qui est conçu pour refermer l'évidement, ouvert en direction distale, de la première partie d'implant (120") après l'introduction de l'élément de liaison (150), de préférence de manière étanche vis-à-vis des bactéries.

14. Système composite selon l'une des revendications précédentes, dans lequel la première partie d'implant (120, 120', 120") et/ou le corps de fermeture (190) sont réalisés en un matériau biocompatible.

15. Système composite selon l'une des revendications précédentes, dans lequel l'élément de liaison (140, 140', 150) est réalisé en un métal ou un alliage de métal biocompatible, de préférence du titane ou un alliage contenant du titane.
